# EUROPÄISCHE PATENTSCHRIFT

(11) **EP 4 313 431 B1**
(45) Veröffentlichungstag und Bekanntmachung des Hinweises auf die Patenterteilung: **12.02.2025**
(21) Anmeldenummer: 22717094.1
(22) Anmeldetag: 21.03.2022
(51) Int. Cl.: B06B 1/06, B06B 3/00, B23K 20/10, B29C 65/08, B29C 65/00

(54) **KONVERTER MIT INTEGRIERTEM BOLZEN**
CONVERTER WITH AN INTEGRATED BOLT
CONVERTISSEUR À BOULON INTÉGRÉ

(30) Priorität: 01.04.2021 DE 102021108462
(43) Veröffentlichungstag der Anmeldung: 07.02.2024
(73) Patentinhaber: Herrmann Ultraschalltechnik GmbH & Co. KG, 76307 Karlsbad (DE)
(72) Erfinder: VOGLER, Ulrich, 88690 Uhldingen-Mühlhofen (DE)
(74) Vertreter: WSL Patentanwälte Partnerschaft mbB
(86) Internationale Anmeldenummer: PCT/EP2022/057274
(87) Internationale Veröffentlichungsnummer: WO 2022/207379

(56) Entgegenhaltungen:
- WO-A1-2008/156116
- DE-A1- 10 023 302
- US-A1- 2016 001 498
- US-A1- 2017 274 420
- US-A1- 2018 304 308

## Beschreibung

Die vorliegende Erfindung betrifft einen Konverter für eine Ultraschallschwingeinheit. Der Konverter ist dafür vorgesehen und entsprechend ausgelegt, eine elektrische Wechselspannung in eine akustische Schwingung umzuwandeln.

Der Konverter weist ein Konvertergrundteil, einen Bolzen, ein Spannelement und mindestens ein Piezoelement mit einer Durchgangsöffnung auf, wobei der Bolzen des Konverters die Durchgangsöffnung durchdringt und das Spannelement das zumindest eine Piezoelement in Richtung des Konvertergrundteils spannt. Dabei hat das Konvertergrundteil eine Gewindebohrung, in welche der Bolzen eingeschraubt wird. Entsprechende Konverter sind beispielsweise aus der US 2017/274420 A1 oder der US 2016/001498 A1 bekannt.

Durch das Spannelement wird sichergestellt, dass eine mechanische Schwingung des Piezoelementes auf das Konvertergrundteil übertragen wird.

Häufig werden hier mehrere Piezoelemente in Scheibenform übereinander mit einem Bolzen montiert und mit Hilfe eines als Schraubenmutter ausgebildeten Spannelements auf eine Fläche des Konvertergrundteils geklemmt, sodass durch Beaufschlagen der Piezoelemente mit einer elektrischen Wechselspannung die Piezoelemente eine mechanische Schwingung des Konvertergrundteils anregen.

Solche Konverter kommen häufig in Ultraschallschwingeinheiten zum Einsatz, die aus einer Sonotrode und einem Konverter bestehen. Der Konverter bzw. das Konvertergrundteil ist mit der Sonotrode verschraubt, sodass eine mechanische Schwingung des Konvertergrundteils auf die Sonotrode übertragen wird. Häufig weisen solche Ultraschallschwingeinheiten noch einen Amplitudentransformator auf, der zwischen Konverter und Sonotrode angeordnet ist und die Amplitude der Schwingung transformieren, d. h. in der Regel erhöhen soll. Die von den Piezoelementen erzeugte mechanische Schwingung wird dadurch verstärkt.

Insbesondere in Anwendungsfällen mit beengten Platzverhältnissen wird häufig auf den Amplitudentransformator verzichtet, so dass mit dem Konverter größere Amplituden erzeugt werden müssen. Dies hat jedoch bei den bekannten Konvertern zur Folge, dass sich im Bereich der Verschraubung des Bolzens mit dem Konvertergrundteil ein überbeanspruchter Bereich ausbildet, was die Lebensdauer der Ultraschallschwingeinheit deutlich reduziert. In der Regel bilden sich dann im Laufe der Zeit in der Nähe der Gewindeverbindung Risse im Material, wodurch das Schwingungsverhalten negativ beeinflusst hat.

Dieses Problem wurde bislang dadurch angegangen, indem beispielsweise die Vorspannung, d. h. die Kraft, mit welcher das zumindest eine Piezoelement an das Konvertergrundteil gedrückt wird, reduziert wird. Allerdings wird dadurch die Schwingungsamplitude reduziert und die Schwingungsgüte aufgrund der schlechteren Ankopplung von Piezoelement und Konvertergrundteil verringert, was nicht für alle Anwendungsfälle akzeptabel ist. Eine weitere Möglichkeit besteht darin, die Amplitude der angelegten Wechselspannung zu reduzieren mit der Folge, dass auch die Amplitude der Ultraschallschwingung reduziert wird. Auch hier ist diese Maßnahme nicht für alle Anwendungsfälle geeignet. In jedem Fall erhöht dies die notwendige Bearbeitungszeit.

Schließlich wurde auch versucht durch Sondergewindeformen mit speziell gewählten Eckenradien und einem entsprechenden Freistich in der Bohrung des Konvertergrundteils, in welchem der Bolzen verschraubt ist, die Verspannungen in den Griff zu bekommen. Dies führt tatsächlich zu einer Erhöhung der Lebensdauer; es ist jedoch vergleichsweise aufwendig und daher teuer.

In der Praxis können diese Systeme daher nur mit geringen Schwingungsamplituden betrieben werden und haben zudem nur eine begrenzte Standzeit.

Weitere Konverter, die zur Erzeugung von kleinen Schwingungsamplituden vorgesehen sind, finden sich in WO 2008/156116, DE 100 23 302 A1 und US 2018/0304308 A1.

Ausgehend von dem beschriebenen Stand der Technik ist es daher Aufgabe der vorliegenden Erfindung, einen Konverter bereitzustellen, der mit hohen Amplituden betrieben werden kann und gleichzeitig eine hohe Standzeit gewährleistet.

### Erfindungsgemäß wird diese Aufgabe durch Anspruch 1 gelöst

Unter einer stoffschlüssigen Verbindung werden alle Verbindungen verstanden, bei denen die Verbindungspartner, d.h. hier Bolzen des Konverters und Konvertergrundteil durch atomare oder molekulare Kräfte zusammengehalten werden.

Prinzipiell kann der Bolzen an das Konvertergrundteil angeschweißt oder angelötet werden.

Auch dies ist jedoch aufwendig. Vorteilhaft werden daher in einer bevorzugten Ausführungsform der Bolzen und das Konvertergrundteil aus einem Materialstück gefertigt sind. Der Bolzen und das Konvertergrundteil sind daher zusammen einteilig ausgebildet.

Erfindungsgemäß ist vorgesehen, dass der Bolzen an seiner Verbindungsstelle zum Konvertergrundteil mit einem Übergangsradius R versehen ist, welcher größer als 0,5 mm, vorzugsweise >1 mm und besonders bevorzugt >2 mm beträgt.

Das Vorsehen eines Übergangsradius führt zu einer Stabilisierung zwischen Bolzen und Konvertergrundteil, da durch einen kleineren Kerbwirkungsfaktor die Spannungen im Material reduziert werden. Grundsätzlich wird die Stabilisierung umso größer, je größer der Übergangsradius ist. Allerdings ist zu beachten, dass das Piezoelement über den Bolzen geschoben und gegen das Konvertergrundteil gedrückt wird. Dabei ist ein möglichst vollflächiger Kontakt zwischen Piezoelement und Konvertergrundteil notwendig, um die Ultraschallschwingung zu übertragen und das Piezoelement nicht zu beschädigen. Piezoelemente bestehen meist aus Piezokeramiken, die sehr spröde sind und daher empfindlich auf Zugspannungen, z. B. in Folgen von Verformungen reagieren. Das Piezoelement darf daher nicht am Übergangsradius anliegen.

In einer weiteren bevorzugten Ausführungsform ist vorgesehen, dass eine Distanzscheibe mit einer Durchgangsöffnung vorgesehen ist, wobei die Distanzscheibe und das zumindest eine Piezoelement derart angeordnet ist, dass der Bolzen zunächst die Durchgangsöffnung der Distanzscheibe und dann die Durchgangsöffnung des zumindest einen Piezoelementes durchdringt, sodass die Distanzscheibe sowohl an dem Konvertergrundteil als auch an dem Piezoelement anliegt. Um eine optimale Kraftübertragung zu gewährleisten ist die Distanzscheibe, die beispielsweise aus Titan oder einer Titanlegierung gefertigt sein kann, hilfreich.

Da gemäß einer bevorzugten Ausführungsform Konvertergrundteil und Bolzen aus einem Stück gefertigt sind, ist es fertigungstechnisch nicht möglich, die Oberfläche des Konvertergrundteils im Bereich der Verbindung mit dem Bolzen mit hoher Oberflächengüte auszuführen. Übliche Läppvorgänge können aufgrund des Vorhandenseins des Bolzens nicht durchgeführt werden. Jegliche Unebenheit auf der Oberfläche des Konvertergrundteils reduziert jedoch die Schwingungsübertragung, wenn das Piezoelement an dieser Fläche anliegt. Durch das Vorsehen einer Distanzscheibe, die mit sehr hoher Oberflächengüte (Rauheit Ra < 0,01 und Ebenheit < 0,005mm) ausgeführt werden kann, ist zumindest eine Ultraschallschwingungsübertragung von dem zumindest einen Piezoelement in die Distanzscheibe in guter Qualität möglich. Wird die Distanzscheibe auf die möglicherweise nicht ganz ebene Oberfläche des Konvertergrundteils gedrückt, kommt es dennoch zu einer besseren Übertragung der Ultraschallschwingung als wenn das Piezoelement direkt auf die Oberfläche des Konvertergrundteils gedrückt würde.

In einer weiteren bevorzugten Ausführungsform ist vorgesehen, dass die Durchgangsöffnung der Distanzscheibe sich zumindest an ihrer dem Konvertergrundteil zugewandten Seite erweitert. Dies kann beispielsweise dadurch erfolgen, dass die entsprechende Kante mit einer Fase versehen wird. Es kann von Vorteil sein, auch die andere Seite der Distanzscheibe entsprechend auszuführen. Dies hat den Vorteil, dass bei der Montage des Ultraschallschwingsystems nicht darauf geachtet werden muss, dass die Distanzscheibe in der richtigen Orientierung auf den Bolzen des Konverters geschoben wird.

Insbesondere dann, wenn der Bolzen mit einem Übergangsradius an der Verbindung zum Konvertergrundteil versehen ist, ist die Erweiterung von besonderem Vorteil, da dann die Distanzscheibe flächig auf dem Konvertergrundteil aufliegen kann, selbst wenn der Übergangsradius relativ groß ausgebildet ist. Die Erweiterung ist in einer bevorzugten Ausführungsform derart ausgeführt, dass die Durchgangsöffnung der Distanzscheibe in einer Schnittansicht parallel zur Längsrichtung entlang der Länge l an ihrer dem Konvertergrundteil zugewandten Seite einen Eintrittsradius E aufweist, welcher >0,5 mm, vorzugsweise >1 mm und besonders bevorzugt >2 mm beträgt.

Insbesondere ist es von Vorteil, wenn für den Eintrittsradius E gilt: 2*R* > *E* ≥ *R*, wobei vorzugsweise gilt: 1,2*R* > *E > R.*

In einer weiteren bevorzugten Ausführungsform ist vorgesehen, dass der Bolzen einen Endabschnitt aufweist, der von dem Konvertergrundteil abgewandt ist und mit einem Außengewinde versehen ist. Dabei hat es sich gezeigt, dass das Außengewinde am besten als Sägengewinde ausgebildet ist. Das Sägengewinde ist asymmetrisch und hat ein Profil, welches einem Sägezahn gleicht.

Wie bereits oben erwähnt, ist in einer bevorzugten Ausführungsform vorgesehen, dass der Bolzen und das Konvertergrundteil aus einem Materialstück gefertigt sind.

Durch diese Maßnahme ist der Materialverbrauch meist höher, da der Bolzen des Konverters eine deutlich geringere Ausdehnung in den Querrichtungen, d. h. senkrecht zu der Längsachse, die entlang der Länge l verläuft, hat als das Konvertergrundteil und dementsprechend bei der einstückigen Fertigung im Bereich des Bolzens viel Material abgetragen werden muss, um den Bolzen zu fertigen.

Die beschriebene Maßnahme ist daher insbesondere dann von Vorteil, wenn der Konverter als Sonotrode ausgebildet ist. Das Konvertergrundteil weist eine Siegelfläche aufweist, die dafür vorgesehen ist, mit einem zu bearbeitenden Material in Kontakt zu treten.

Solche Sonotroden mit integriertem Konverter werden auch als Kompaktschwinger bezeichnet. Bei einem Kompaktschwinger ist der Bolzen innerhalb der Sonotrode angeordnet. D. h. die Sonotrode bzw. deren Konvertergrundteil hat eine Siegelfläche, die dafür vorgesehen ist, mit einem zu bearbeiteten Material in Kontakt zu treten, und eine Rückseite, die gegenüberliegend zur Siegelfläche angeordnet ist, wobei in der Rückseite eine Ausnehmung ausgebildet ist, in welcher der Bolzen angeordnet ist.

Durch diese Anordnung des Bolzens innerhalb der Sonotrode wird praktisch kein zusätzliches Material benötigt, um den Bolzen auszubilden. Im Gegenteil, dadurch, dass bei dieser Ausführungsform die Ausnehmung in der Rückseite nicht vollständig geräumt werden muss, da der Bolzen des Konverters bestehen bleibt, wird sogar Material eingespart.

In einer weiteren bevorzugten Ausführungsform ist vorgesehen, dass der Konverter von der Siegelfläche bis zur Rückseite eine Länge l hat, wobei der Bolzen sich in Richtung der Länge l erstreckt, wobei vorzugsweise die Länge l in etwa der halben Wellenlänge einer Ultraschallschwingung entspricht, mit welcher der als Sonotrode ausgebildete Konverter in eine Resonanzschwingung gebracht werden kann.

Dabei ist in einer weiteren bevorzugten Ausführungsform vorgesehen, dass die Position, an welcher der Bolzen an dem Konvertergrundteil befestigt ist, in der Nähe des Mittelpunkts der Länge l angeordnet ist, d.h von der Siegelfläche mit der Distanz d, für die gilt: 0,4*l* > *d >* 0,71, beabstandet ist.

Dabei ist es besonders bevorzugt, wenn das zumindest eine Piezoelement in der Längsrichtung innerhalb der Länge l, d.h. zwischen Siegelfläche und Rückseite, angeordnet ist.

Beispielsweise können mindestens vier Piezoelemente mit jeweils einer Durchgangsöffnung vorgesehen sein, die von dem Bolzen durchdrungen werden und die alle in der Längsrichtung zwischen Siegelfläche und Rückseite des Konvertergrundteils, d.h. innerhalb der Länge l angeordnet sind. Dies hat schwingungstechnische Vorteile, da die Sonotrode nun im Wesentlichen in ihrem Inneren angeregt wird.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:
Figur 1 eine perspektivische Ansicht eines erfindungsgemäßen Konverters,
Figur 2 eine Schnittansicht durch die Ausführungsform von Figur 1,
Figur 3 eine teilgeschnittene Seitenansicht der Ausführungsform von Figur 1 und
Figur 4 eine Schnittansicht durch die Ausführungsform von Figur 1 ohne Piezoelemente.

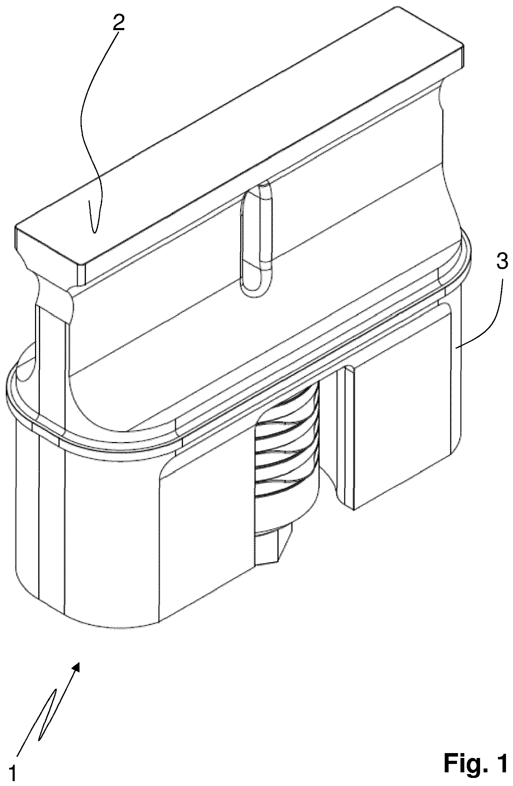

In Figur 1 ist eine perspektivische Ansicht eines Konverters gemäß der Erfindung gezeigt. Der Konverter 1 ist als Sonotrode ausgebildet und weist eine Siegelfläche 2 auf. Die Siegelfläche 2 ist dafür vorgesehen, mit einem zu bearbeitenden Material in Kontakt zu treten und eine Ultraschallschwingung in das Material zu übertragen.

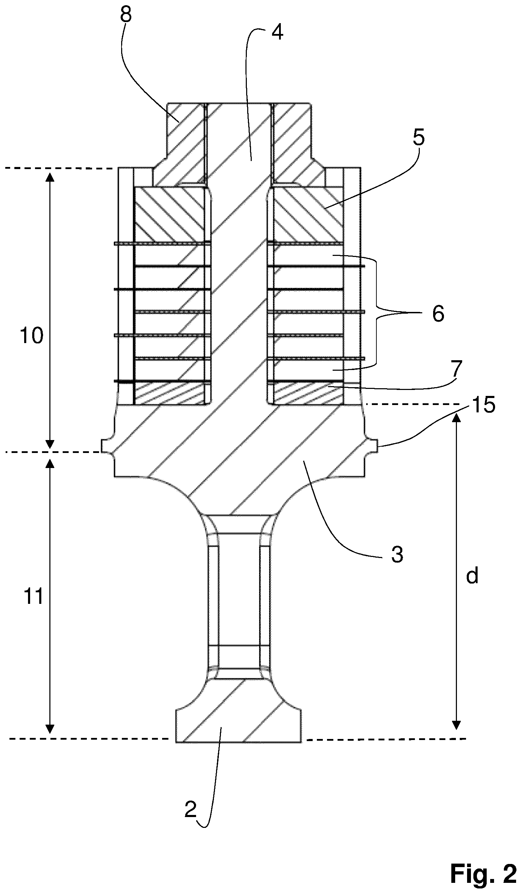

Der Konverter 1 besitzt ein Konvertergrundteil 3, welches einen hinteren Abschnitt 10 mit einer Rückseite, die gegenüberliegend zu der Siegelfläche 2 angeordnet ist, und einen vorderen Abschnitt 11 aufweist, wie in der Querschnittsansicht von Figur 2 deutlich zu erkennen ist. Dabei stellt ein umlaufender Bund 15 die Grenze zwischen vorderem Abschnitt 11 und hinterem Abschnitt 10 dar. Während der Schwingung bildet sich eine stehende Welle in Längsrichtung entlang der Länge l im Konverter aus. Der umlaufende Bund ist in der Nähe eines Schwingungsminimums angeordnet. Der Konverter kann an dem umlaufenden Bund, z.B. über O-Ringe, gehalten werden, ohne dass das Schwingungsverhalten des Konverters deutlich beeinflusst wird.

Dabei ist der vordere Abschnitt 11, der die Siegelfläche 2 aufweist, größtenteils deutlich schmaler ausgebildet als der hintere Bereich 10. Dadurch kommt es in diesem Bereich zu einer Amplitudentransformation. In dem hinteren Bereich 10 ist eine Ausnehmung in das Konvertergrundteil eingebracht, in welcher ein Bolzen 4 einstückig mit dem Konvertergrundteil 3 verbunden ist.

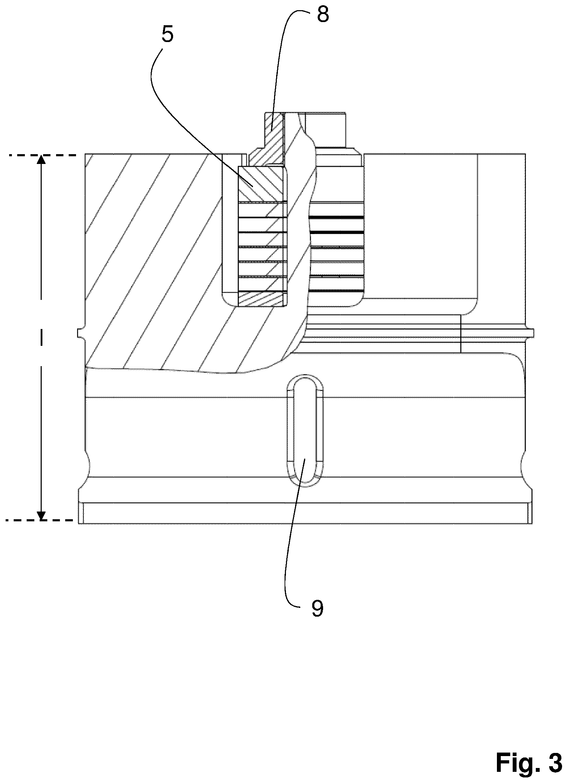

In Figur 3 ist eine teilgeschnittene Seitenansicht des Konverters 1 dargestellt.

Das Konvertergrundteil 3 hat eine Länge l, die sich aus der Länge des hinteren Abschnittes 10 und der Länge des vorderen Abschnittes 11 des Konvertergrundteils 3 zusammensetzt. Die Länge I definiert somit den Abstand zwischen Siegelfläche 2 und Rückseite des Konvertergrundteils. Im Gebrauch bildet sich im Konverter eine stehende Welle mit einer Wellenlänge, die dem Doppelten der Länge l entspricht.

Im vorderen Abschnitt 11 des Konvertergrundteils 3 ist zudem ein Schlitz 9 eingebracht, der sich nicht bis zur Siegelfläche 2 erstreckt. Der Schlitz 9 ist auf der Achse des Bolzens 4 angeordnet, um das Schwingungsverhalten des als Sonotrode ausgebildeten Konvertergrundteils 3 zu verbessern. Über den Bolzen 4 ist zunächst eine Distanzscheibe 7 mit einer entsprechenden zentralen Öffnung geschoben. Die Distanzscheibe 7, die wie auch das Konvertergrundteil 3 einschließlich des Bolzens 4 aus Titan hergestellt sein kann, dient dazu, etwaige Unebenheiten auf der Fläche des Konvertergrundteils in unmittelbarer Umgebung des Bolzens 4 aufzufangen. Die Distanzscheibe 7, die zwar möglichst eben auf der Fläche des Konvertergrundteils 3 aufliegen sollte, kann jedoch kleinere Abweichungen der Oberflächengüte verkraften, ohne dass es zu Beschädigungen der Distanzscheibe 7 kommt. Ebenso verteilt die Distanzscheibe die Kraft des Bolzens gleichmäßig auf die Piezoelemente. Dadurch wird die Gefahr einer Überbeanspruchung der Piezoelemente durch eine ungleichmäßige Krafteinleitung verhindert.

Die Oberseite der Distanzscheibe 7, d. h. die Seite, die von der Fläche des Konvertergrundteils abgewandt ist, ist vorzugsweise mit einer hohen Oberflächengüte ausgestattet. Dies kann beispielsweise mittels Schleifen oder Läppen erfolgen.

Auf der Distanzscheibe 7 sind mehrere, im gezeigten Beispiel sechs, Piezoelemente 6 aufgebracht, die dafür vorgesehen sind, ein elektrisches Wechselspannungssignal in eine mechanische Schwingung zu übertragen. Auf der dem Konvertergrundteil 3 abgewandten Seite der Piezoelemente 6 ist eine Druckscheibe 5, die beispielsweise aus Stahl gefertigt sein kann vorgesehen. Der Bolzen 4 weist an seinem Endabschnitt, der dem Konvertergrundteil 3 abgewandt ist, ein Außengewinde auf, das im gezeigten Beispiel als Sägengewinde ausgebildet ist, in das eine Mutter 8 eingreift. Durch Anziehen der Mutter 8 wird eine Kraft auf die Druckscheibe 5 und über die Druckscheibe 5 auf die Piezoelemente 6 ausgeübt, welche wiederum über das Distanzelement 7 die Schwingung auf das als Sonotrode ausgebildete Konvertergrundteil 3 übertragen.

Man erkennt, dass die Piezoelemente 6, die Distanzscheibe 7 sowie die Druckscheibe 5 einen Innendurchmesser aufweisen, der etwas größer ist als der Außendurchmesser des Bolzens 4, sodass sie sich in axialer Richtung, d. h. in Richtung der Länge l ausdehnen bzw. zusammenziehen können, ohne dass dies Auswirkungen auf den Bolzen 4 hat. Die Piezoelemente können daher eine akustische Schwingung durchführen, ohne dass diese vom Bolzen 4 beeinflusst wird. Darüber hinaus muss darauf geachtet werden, dass die nicht unerheblichen elektrischen Spannungen, die an den Piezoelementen anliegen, nicht über den Bolzen abgeleitet werden. Auch deswegen muss ein genügend großer Abstand zwischen dem Außendurchmesser des Bolzens 4 und dem Innendurchmesser der Piezoelemente 6 bestehen.

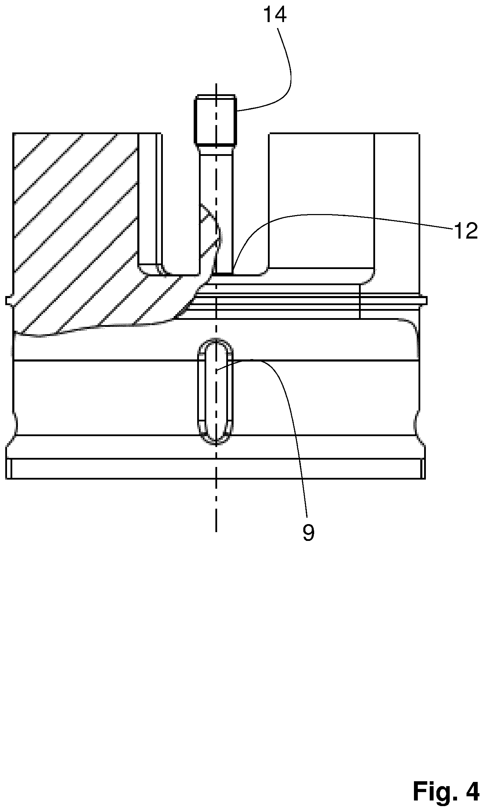

In Figur 4 ist eine teilgeschnittene Seitenansicht des Konverters 1 gezeigt. Dabei sind die in den Figuren 1-3 gezeigten Piezoelemente 6 sowie die Distanzscheibe 7, das Druckelement 5 und die Mutter 8 abgenommen worden.

Man erkennt in dieser Figur deutlich, dass der Bolzen einen Übergangsradius 12 aufweist, der in dem gezeigten Beispiel, 0,75 mm beträgt.

Der Bolzen weist an seinem dem Konvertergrundteil abgewandten Ende einen Gewindeabschnitt 14 auf, auf welchen die Mutter 8 aufgeschraubt werden kann, um die Piezoelemente 6 samt Druckelement 5 und Distanzelement 7 gegen das Konvertergrundteil 3 zu drücken.

Durch die beschriebene einstückige Ausführungsform von Bolzen 4 des Konverters und Konvertergrundteil 3, kann die Standzeit der Ultraschallschwingeinheit 1 deutlich verbessert werden. Der Bolzen wird dafür benötigt, die Mutter 8 zu halten, mit der die notwendige Kraft auf die Piezoelemente aufgebracht wird, um diese gegen das Konvertergrundteil (bzw. gegen die Distanzscheibe) zu drücken.

### Bezugszeichenliste

- 1: Konverter
- 2: Siegelfläche
- 3: Konvertergrundteil
- 4: Bolzen
- 5: Druckscheibe
- 6: Piezoelement
- 7: Distanzscheibe
- 8: Mutter
- 9: Schlitz
- 10: hinterer Abschnitt
- 11: vorderer Abschnitt
- 12: Übergangsradius
- 14: Gewindeabschnitt
- 15: Bund

## Patentansprüche

1. Konverter mit einem Konvertergrundteil, einem mit dem Konvertergrundteil verbundenen Bolzen (4), einem Spannelement und mindestens einem Piezoelement (6) mit einer Durchgangsöffnung, wobei der Bolzen (4) die Durchgangsöffnung durchdringt und das Spannelement das zumindest eine Piezoelement in Richtung des Konvertergrundteils spannt, wobei der Konverter als Sonotrode ausgebildet ist und das Konvertergrundteil eine Siegelfläche aufweist, die dafür vorgesehen ist, mit einem zu bearbeitenden Material in Kontakt zu treten, und wobei das Konvertergrundteil eine Rückseite aufweist, die gegenüberliegend zur Siegelfläche (2) angeordnet ist, wobei in der Rückseite eine Ausnehmung ausgebildet ist, in welcher der Bolzen (4) angeordnet ist, **dadurch gekennzeichnet, dass** der Bolzen (4) stoffschlüssig mit dem Konvertergrundteil verbunden ist, und der Bolzen (4) an seiner Verbindungsstelle zum Konvertergrundteil mit einem Übergangsradius R versehen ist, welcher > 0,5 mm beträgt.

2. Konverter nach Anspruch 1, **dadurch gekennzeichnet, dass** der Bolzen (4) und das Konvertergrundteil aus einem Materialstück gefertigt sind.

3. Konverter (1) nach Anspruch 1 oder 2, **dadurch gekennzeichnet, dass** der Übergangsradius R >1 mm und bevorzugt >2 mm beträgt.

4. Konverter (1) nach einem der Ansprüche 1-3, **dadurch gekennzeichnet, dass** eine Distanzscheibe (7) mit einer Durchgangsöffnung vorgesehen ist, wobei die Distanzscheibe(7) und das zumindest eine Piezoelement (6) derart angeordnet ist, dass der Bolzen (4) zunächst die Durchgangsöffnung der Distanzscheibe (7) und dann die Durchgangsöffnung des zumindest einen Piezoelementes (6) durchdringt, sodass die Distanzscheibe (7) sowohl an dem Konvertergrundteil als auch an dem Piezoelement (6) anliegt.

5. Konverter (1) nach Anspruch 4, **dadurch gekennzeichnet, dass** die Durchgangsöffnung der Distanzscheibe (7) sich an ihrer dem Konvertergrundteil zugewandten Seite erweitert, wobei vorzugsweise die Durchgangsöffnung der Distanzscheibe (7) in einer Schnittansicht parallel zur Längsrichtung entlang der Länge l an ihrer dem Konvertergrundteil zugewandten Seite einen Eintrittsradius E aufweist, welcher > 0,5 mm, vorzugsweise >1 mm und besonders bevorzugt >2 mm beträgt.

6. Konverter (1) nach Anspruch 5, **dadurch gekennzeichnet, dass** für den Eintrittsradius E gilt: 2*R* > *E* ≥ *R*, wobei vorzugsweise gilt: 1,2*R* > *E* > *R.*

7. Konverter (1) nach einem der Ansprüche 1 bis 6, **dadurch gekennzeichnet, dass** der Bolzen (4) einen Endabschnitt aufweist, der von dem Konvertergrundteil abgewandt ist und mit einem Außengewinde versehen ist, wobei vorzugsweise das Außengewinde ein Sägengewinde ist.

8. Konverter nach einem der Ansprüche 1-7, **dadurch gekennzeichnet, dass** der Konverter von der Siegelfläche bis zur Rückseite eine Länge l hat, wobei der Bolzen sich in Richtung der Länge l erstreckt, wobei vorzugsweise die Länge l der halben Wellenlänge einer Ultraschallschwingung entspricht, mit welcher der als Sonotrode ausgebildete Konverter in eine Resonanzschwingung gebracht werden kann.

9. Konverter nach Anspruch 8, **dadurch gekennzeichnet, dass** das zumindest eine Piezoelement (6) in der Längsrichtung innerhalb der Länge l angeordnet ist, wobei vorzugsweise mindestens vier Piezoelemente (6) mit jeweils einer Durchgangsöffnung vorgesehen sind, die von dem Bolzen (4) durchdrungen werden und die alle in der Längsrichtung innerhalb der Länge l angeordnet sind.

## Claims

1. Converter having a converter base part, a bolt (4) connected to the converter base part, a tensioning element and at least one piezo element (6) with a through-opening, the bolt (4) penetrating the through-opening and the tensioning element tensioning the at least one piezo element in the direction of the converter base part, wherein the converter is designed as a sonotrode and the converter base part has a welding surface which is intended to come into contact with a material to be processed, and wherein the converter base part has a rear side which is arranged opposite the welding surface (2), wherein a recess is formed in the rear side in which the bolt (4) is arranged, **characterized in that** the bolt (4) is materially bonded to the converter base part , and the bolt (4) is provided with a transition radius R at its connection point to the converter base part, which is 0.5 mm.

2. Converter according to claim 1, characterized that the bolt (4) and the converter base part are manufactured from one piece of material.

3. Converter (1) according to claim 1 or 2, **characterized in that** the transition radius R is >1 mm and preferably >2 mm.

4. Converter (1) according to one of the claims 1-3, **characterized in that** a spacer disc (7) with a through-opening is provided, the spacer disc (7) and the at least one piezo element (6) being arranged in such a way that the bolt (4) first penetrates the through-opening of the spacer disc (7) and then the through-opening of the at least one piezo element (6), so that the spacer disc (7) abuts both the converter base part and the piezo element (6).

5. Converter (1) according to claim 4, **characterized in that** the through-opening of the spacer disc (7) widens on its side facing the converter base part, the through-opening of the spacer disc (7) preferably having, in a sectional view parallel to the longitudinal direction along the length l, an entry radius E on its side facing the converter base part which is > 0.5 mm, preferably > 1 mm and particularly preferably > 2 mm.

6. Converter (1) according to claim 5, **characterized in that** the following applies to the entry radius E: 2 R > E ≥ R, wherein the following applies preferably: 1.2 R > E > R.

7. Converter (1) according to any one of claims 1 to 6, **characterized in that** the bolt (4) has an end portion facing away from the converter base part and provided with an external thread, preferably the external thread being a saw thread.

8. Converter according to one of the claims 1-7, **characterized in that** the converter has a length I from the welding surface to the rear side, the bolt extending in the direction of the length l, preferably the length I corresponding to half the wavelength of an ultrasonic oscillation with which the converter designed as a sonotrode can be brought into a resonant oscillation.

9. Converter according to claim 8, **characterized in that** the at least one piezo element (6) is arranged in the longitudinal direction within the length l, preferably at least four piezo elements (6) each with a through-opening being provided, which are penetrated by the bolt (4) and which are all arranged in the longitudinal direction within the length l.

## Revendications

1. Convertisseur avec une pièce de base de convertisseur, un boulon (4) attaché à la pièce de base de convertisseur, un élément tendeur et au moins un élément piézoélectrique (6) ayant une ouverture de passage, le boulon (4) traversant l'ouverture de passage et l'élément tendeur tendant ledit au moins élément piézoélectrique en direction de la pièce de base de convertisseur, le convertisseur étant configuré comme sonotrode et la pièce de base de convertisseur comprenant une surface de scellage qui est prévue pour entrer en contact avec un matériau à usiner, et la pièce de base de convertisseur comprenant une face arrière qui est disposée en face de la surface de scellage (2), un évidement étant formé dans la face arrière, dans lequel le boulon (4) est disposé, **caractérisé en ce que** le boulon (4) est attaché à la pièce de base de convertisseur par une liaison par adhérence de matière et, à l'endroit de jonction avec la pièce de base de convertisseur, le boulon (4) a un rayon de transition R qui est supérieur à 0,5 mm.

2. Convertisseur selon la revendication 1, **caractérisé en ce que** le boulon (4) et la pièce de base de convertisseur sont réalisés en une seule pièce de matériau.

3. Convertisseur (1) selon la revendication 1 ou 2, **caractérisé en ce que** le rayon de transition R est supérieur à 1 mm et de préférence supérieur à 2 mm.

4. Convertisseur (1) selon l'une des revendications 1 à 3, **caractérisé en ce qu'**il est prévu un disque d'écartement (7) ayant une ouverture de passage, le disque d'écartement (7) et ledit au moins un élément piézoélectrique (6) étant disposés de façon que le boulon (4) traverse d'abord l'ouverture de passage du disque d'écartement (7) et ensuite l'ouverture de passage dudit au moins un élément piézoélectrique (6), si bien que le disque d'écartement (7) soit en appui aussi bien sur la pièce de base de convertisseur que sur l'élément piézoélectrique (6).

5. Convertisseur (1) selon la revendication 4, **caractérisé en ce que** l'ouverture de passage du disque d'écartement (7) s'élargit sur le côté orienté vers la pièce de base de convertisseur, l'ouverture de passage du disque d'écartement (7) ayant, en une vue en coupe parallèlement à la direction de la longueur, le long de la longueur 1, à son côté orienté vers la pièce de base de convertisseur, un rayon d'entrée E qui est supérieur à 0,5 mm, de préférence supérieur à 1 mm et de façon particulièrement préférée supérieur à 2 mm.

6. Convertisseur (1) selon la revendication 5, **caractérisé en ce qu'**il est déterminé pour le rayon d'entrée : 2R > E ≥ R, et, de préférence, étant déterminé : 1,2 > E > R.

7. Convertisseur (1) selon l'une des revendications 1 à 6, **caractérisé en ce que** le boulon (4) comprend une partie d'extrémité qui est opposée à la pièce de base de convertisseur et est pourvu d'un filetage, le filetage étant, de préférence, un filet en dent de scie.

8. Convertisseur (1) selon l'une des revendications 1 à 7, **caractérisé en ce que** le convertisseur a une longueur 1 allant de la surface de scellage jusqu'à la face arrière, le boulon s'étendant dans la direction de la longueur, la longueur correspondant, de préférence, à la moitié de la longueur d'onde d'une oscillation ultrason par laquelle le convertisseur, formé comme une sonotrode, peut être mis en une oscillation de résonance.

9. Convertisseur (1) selon la revendication 8, **caractérisé en ce que** ledit au moins un élément piézoélectrique (6) est disposé, sur la longueur 1, dans la direction de la longueur, de préférence, au moins quatre éléments piézoélectriques (6) étant pourvus, chacun, d'une ouverture de passage, qui sont traversés par le boulon (4) et qui sont tous disposés, sur la longueur l, dans la direction de la longueur.
